# EUROPÄISCHE PATENTSCHRIFT

(11) **EP 0 852 304 B1**
(45) Veröffentlichungstag und Bekanntmachung des Hinweises auf die Patenterteilung: **02.05.2002**
(21) Anmeldenummer: 97121714.6
(22) Anmeldetag: 10.12.1997
(51) Int. Cl.: F16F 13/26

(54) **Automatisch gesteuertes, hydraulisches Zweikammer-Lagerelement**
Automatically controlled hydraulic two-chamber support unit
Unité de support hydraulique à deux chambres et auto-régulant

(30) Priorität: 17.12.1996 DE 19652502
(43) Veröffentlichungstag der Anmeldung: 08.07.1998
(73) Patentinhaber: ContiTech Vibration Control GmbH, 30165 Hannover (DE)
(72) Erfinder: Heitzig, Jürgen, 31535 Neustadt (DE)
(74) Vertreter: Schneider, Egon

(56) Entgegenhaltungen:
- EP-A- 0 173 273
- EP-A- 0 188 101
- EP-A- 0 547 287
- DE-C- 4 238 752
- DE-U- 8 901 683
- DE-U- 9 212 871
- US-A- 4 840 358
- US-A- 5 601 280

## Beschreibung

Die Erfindung betrifft ein automatisch gesteuertes, hydraulisches Zweikammer-Lagerelement zur hydraulisch-gedämpften Abstützung von Kraftfahrzeugmotoren.

Der Hydraulikraum eines solchen Lagerelements ist durch eine Drosselscheibe in einen Arbeitsraum und einen Ausgleichsraum unterteilt. Die Drosselscheibe ist mit einer ersten - vorzugsweise als Ringkanal ausgebildeten - und mit einer zusätzlichen, parallelgeschalteten Strömungsverbindung versehen. Die zusätzliche parallelgeschaltete Strömungsverbindung weist ein steuerbares Verschlußmittel auf.

Der Zweck hydroelastischer Lagerelemente besteht darin, Schwingungen von Verbrennungskraftmaschinen zu dämpfen. Beim Betrieb von Kraftfahrzeugen kommen zusätzlich zu den Schwingungen des Antriebsmotors auch noch Erschütterungen von seiten der Fahrbahn hinzu, die ebenfalls eliminiert werden sollen.

Ein gattungsgemäßes Lagerelement ist aus dem Gebrauchsmuster G 92 12 871.8 bekannt. Dieses Lager besteht im wesentlichen aus einem elastomeren Tragkörper und einem Hydraulikraum, der durch eine Drosselscheibe in einen Arbeitsraum und einen Ausgleichsraum unterteilt ist. In der Drosselscheibe befindet sich ein Ringkanal. Eine zusätzliche Strömungsverbindung zwischen Arbeits- und Ausgleichsraum ist mit einem zweiköpfigen Steuerstempel versehen. Der Steuerstempel weist einen Stempelfreiweg auf, der in Abhängigkeit von der Schwingungsfrequenz durch den in Bewegungsrichtung vor den Stempelköpfen vorhandenen Staudruck freigegeben oder geschlossen wird.

Eine selektive Anpassung von Dämpfung und dynamischer Steifigkeit an die beiden problematischen Zustände Leerlauf und Fahrbahnunruhe ist mit dem bekannten Lagerelement nicht möglich.

Die bisher nur wenig berücksichtigte Anforderung an eine optimale Motorlagerung besteht nämlich in der Abdämpfung von Erschütterungen durch Fahrbahnunebenheiten, einerseits, und Verminderung der übertragung von Motorschwingungen auf das Chassis, andererseits.
Hier setzt die vorliegende Erfindung ein, indem sie, ausgehend von dem gattungsgemäßen Stand der Technik, diesen in der Weise weiterbildet, daß das der zusätzlichen Strömungsverbindung zugeordnete Verschlußmittel ein Schaltventil ist, das über eine Luftkammer mit einem dem Außenraum zugewandten Rückschlagventil derart in Wirkverbindung steht, daß bei Erregung von der Fahrbahn her über das Schaltventil Luft aus der Luftkammer gepumpt, das Schaltventil dadurch angezogen und der Kanal geschlossen wird.

Durch einen derartigen Aufbau wird folgendes bewirkt:

Bei stehendem Fahrzeug ist das Schaltventil geöffnet. D. h.: Außer dem Ringkanal ist zusätzlich auch der regelbare Zusatzkanal geöffnet. Dabei kommt es zu einer hohen Frequenz für die Dämpfung und zu einer Absenkung der Federrate, die auf die Leerlauffrequenz abgestimmt ist. Bei fahrendem Fahrzeug wird bei Erregungen von der Fahrbahn her über das Schaltventil Luft aus der Luftkammer gepumpt. Das Rückschlagventil bewirkt, daß das Schaltventil angezogen und der zweite Kanal geschlossen wird. Dann wirkt nur noch der erste Kanal. Die Frequenz sinkt auf die für die Vorderbau-Unruhe bei Straßenfahrt gewünschte Frequenz von ca 5 - 15 Hz ab.

Entsprechend einer bevorzugten Weiterbildung der Erfindung kann mit einer fremderregten Regeleinrichtung durch einfaches Zuschalten des Luftaustritts binter dem Rückschlagventil Einfluß auf die Eigenschaften des Lagers genommen werden.

Anhand von schematischen Zeichnungen wird nachfolgend der Aufbau des erfindungsgemäßen Lagers beschrieben.

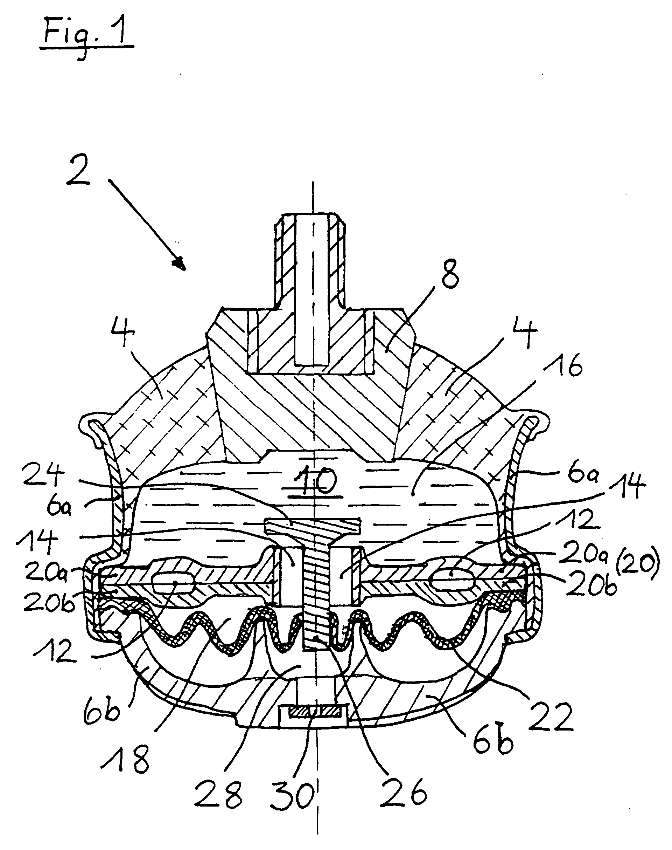

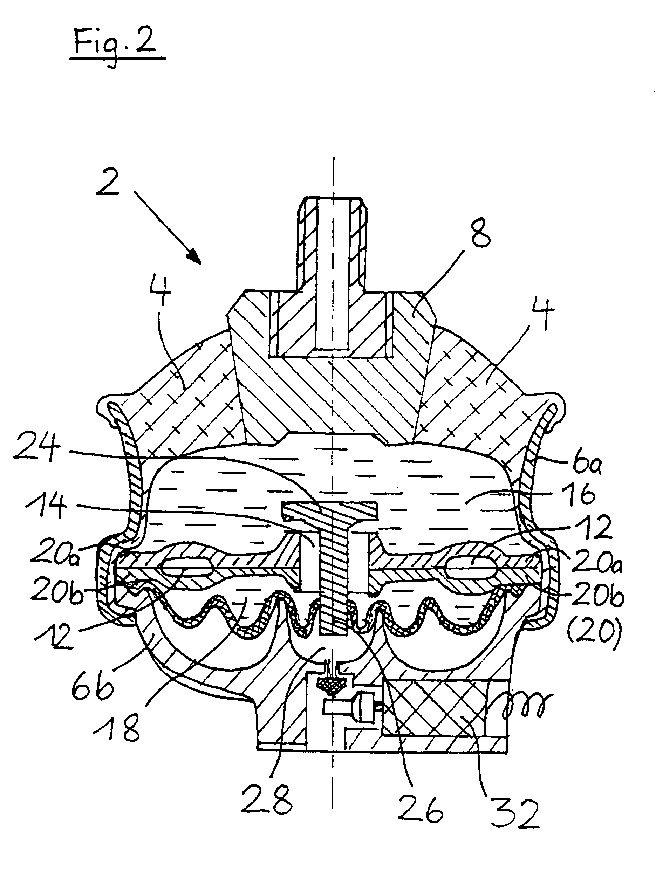

Die Figur 1 zeigt eine bevorzugte Ausführungsform des erfindungsgemäßen Hydrauliklagers im Längsschnitt. Fig. 2 zeigt eine Weiterbildung der in Fig. 1 dargestellten Ausführungsform, ebenfalls im Längsschnitt.

Die in den beiden Abbildungen dargestellten Lager 2 sind aus einem zweiteiligen, topfartigen ersten (unteren) Anschlußstück 6a, 6b und einem über ein hohlkegeliges (kegelmantel- bis ringförmiges) Federelement 4 elastisch dagegen abgestützten zweiten (oberen) Anschlußstück 8 aufgebaut. Das untere Anschlußstück 6a, 6b dient zur Aufnahme einer zweiteiligen, aus erstem Teilraum 16 und zweitem Teilraum 18 bestehenden, mit Dämpfungsflüssigkeit gefüllten Dämpfungskammer 10. Erster 16 und zweiter Teilraum 18 sind mittels einer mit Kanälen 12, 14 versehenen Trennwand (Drosselscheibe) 20 gegeneinander abgeteilt. Der zweite (untere) Teilraum 18 ist gegenüber dem Außenraum durch eine Gummimembran 22 abgedichtet.

In der Trennwand 20 ist ein Ringkanal 12 als erste Strömungsverbindung zwischen dem ersten, als Arbeitskammer dienenden (oberen) Teilraum 16 und dem zweiten, als Ausgleichskammer dienenden (unteren) Teilraum 18 vorgesehen.

Die Trennwand 20 weist einen weiteren, die beiden Teilräume verbindenden Strömungskanal 14 auf. Dieser Strömungskanal 14 dient zur Aufnahme eines Schaltventils 24, welches über einen Stößel 26 mit einer außerhalb der Gummimembran 22 befindlichen Luftkammer 28 in Verbindung steht. Diese Luftkammer 28 ist teils von der Gummimembran 22, teils von dem unteren Anschlußstück 6b umschlossen. Ein in dem unteren Anschlußstück 6b eingelassenes Rückschlagventil 30 stellt eine Verbindung zwischen der Luftkammer 28 und dem Außenraum dar.

Bei der in den beiden Figuren dargestellten Ausführungsformen der Erfindung erfolgt der Wechsel zwischen den Betriebszuständen gedämpft/ungedämpft in Abhängigkeit von der Größe der Amplituden der anfallenden Schwingungen, wobei bei großen Amplituden die dämpfende Wirkung der Hydraulikkammer 10 voll zur Wirkung gelangt.

Die mit Kanälen 12, 14 versehene Trennwand 20 ist in Fig. 1 als zweiteilige 20a, 20b, mit Ringkanal 12 versehene Drosseleinheit ausgebildet.

Entsprechend der in Fig. 2 dargestellten Ausführungsform der Erfindung kann das Rückschlagventil 30 mit einer verschließbaren Regeleinrichtung (Schaltelement, Schaltventil) 32 versehen sein.
Dabei kann der Wechsel zwischen den Betriebszuständen gedämpft/ungedämpft willkürlich, beispielsweise mit Hilfe von einem vom Armaturenbrett zu schaltenden Magnetventil 32 oder aber auch selbsttätig, etwa über einen Bordrechner in Abhängigkeit von vorgegebenen Parametern vorgenommen werden.

### Bezugszeichenliste

- 2: Hydrauliklager
- 4: Federelement
- 6a, 6b: unteres Anschlußstück
- 8: oberes Anschlußstück
- 10: Dämpfungskammer, Dämpfungsflüssigkeit
- 12, 14: Kanäle, Strömungsverbindungen
- 12: Rinkanal
- 16: erster (oberer) Teilraum (Arbeitskammer)
- 18: zweiter (unterer) Teilraum (Ausgleichskammer)
- 20 (20a, 20b): Trennwand, Drosselscheibe
- 22: Gummimembran
- 24: Schaltventil
- 26: Stößel
- 28: Luftkammer
- 30: Rückschlagventil
- 32: Regeleinrichtung (Schaltmagnet, Schaltventil)

## Patentansprüche

1. Automatisch gesteuertes, hydraulisches Zweikammer-Lagerelement (2) zur hydraulisch gedämpften Abstützung von Kraftfahrzeugmotoren, dessen Hydraulikraum (10) durch eine mit einer ersten - vorzugsweise als Ringkanal (12) ausgebildeten - und einer zusätzlichen, parallelgeschalteten Strömungsverbindung (14) versehene Drosselscheibe (20) in eine Arbeitskammer (16) und eine Ausgleichskammer (18) unterteilt ist, wobej die zusätzliche parallelgeschaltete Strömungsverbindung mi t einem steuerbaren Verschlußmittel versehen ist,
**dadurch gekennzeichnet,**
**daß** das der zusätzlichen Strömungsverbindung (14) zugeordnete Verschlußmittel ein Schaltventil (24) ist, das über eine Luftkammer (28) mit einem dem Außenraum zugewandten Rückschlagventil (30) derart in Wirkverbindung steht, daß bei Erregung von der Fahrbahn her über das Schaltventil (24) Luft aus der Luftkammer (28) gepumpt, das Schaltventil (24) dadurch angezogen und der Kanal (14) geschlossen wird.

2. Lagerelement nach Anspruch 1,
**dadurch gekennzeichnet,**
**daß** das Schaltventil (24) mittels einer an der Luftkammer (28) angeordneten Regeleinrichtung (32) zusätzlich extern steuerbar ist.

## Claims

1. Automatically controlled, hydraulic, two-chamber bearing element (2) for supporting automotive vehicle engines in a hydraulically damped manner, the hydraulic chamber (10) of which element is divided into a working chamber (16) and an equalising chamber (18) by a baffle (20), which is provided with a first flow connection (14) - preferably in the form of annular duct (12) - and with an additional parallel-connected flow connection (14), the additional parallel-connected flow connection being provided with a controllable closure means, **characterised in that** the closure means, associated with the additional flow connection (14), is a switching valve (24) which is in operative connection with a non-return valve (30), facing the outside area, via an air chamber (28) in such a manner that, during actuation from the travel path via the switching valve (24), air is pumped from the air chamber (28) which switching valve (24) thereby becomes operative and the duct (14) is closed.

2. Bearing element according to claim 1, **characterised in that** the switching valve (24) is additionally externally controllable by means of a regulating arrangement (32) disposed on the air chamber (28).

## Revendications

1. Unité de support hydraulique à deux chambres et auto-régulante (2) pour servir de palier d'appui à amortissement hydraulique pour des moteurs de véhicules automobiles, dont le compartiment hydraulique (10) est divisé en une chambre de travail (16) et une chambre de compensation (18) au moyen d'une bague d'étranglement (20) munie d'une première liaison d'écoulement (14), réalisée de préférence sous forme de canal annulaire (12), et d'une liaison d'écoulement supplémentaire (14) disposée en parallèle, la liaison d'écoulement supplémentaire (14) disposée en parallèle étant munie d'un élément d'obturation pouvant être commandé, **caractérisée en ce que** l'élément d'obturation attribué à la liaison d'écoulement supplémentaire (14) est une soupape de commande (24) qui, par l'intermédiaire d'une chambre d'air (28), est en interaction avec une vanne anti-retour (30) dirigée vers l'extérieur, et ceci de telle manière que, dans le cas d'une excitation provenant de la route, de l'air est pompé hors de la chambre d'air (28) par l'intermédiaire de la soupape de commande (24), la soupape de commande (24) étant ainsi attirée et le canal (14) obturé.

2. Unité de support selon la revendication 1, **caractérisée en ce que** la soupape de commande (24) peut en outre faire l'objet d'une commande par l'extérieur au moyen d'un dispositif de régulation (32) placé sur la chambre d'air (28).
